(19) Europäisches Patentamt
European Patent Office
Office européen des brevets

(11) **EP 1 877 826 B1**

(12) **FASCICULE DE BREVET EUROPEEN**

(45) Date de publication et mention de la délivrance du brevet:
**25.02.2009 Bulletin 2009/09**

(21) Numéro de dépôt: **06754748.9**

(22) Date de dépôt: **18.04.2006**

(51) Int Cl.:
*G01S 13/66* (2006.01)    *G01S 7/292* (2006.01)
*G01S 7/527* (2006.01)    *G01S 15/66* (2006.01)

(86) Numéro de dépôt international:
**PCT/EP2006/061630**

(87) Numéro de publication internationale:
**WO 2006/117290 (09.11.2006 Gazette 2006/45)**

(54) **DÉTECTEUR SÉQUENTIEL MARKOVIEN**

NACHWEIS VON MARKOV-SEQUENZEN

MARKOV SEQUENCE DETECTION

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **29.04.2005 FR 0504390**

(43) Date de publication de la demande:
**16.01.2008 Bulletin 2008/03**

(73) Titulaire: **THALES**
**92200 Neuilly sur Seine (FR)**

(72) Inventeur: **BILLON, Didier**
**F-29200 Brest (FR)**

(74) Mandataire: **Lucas, Laurent Jacques**
**Marks & Clerk France**
**Conseils en Propriété Industrielle**
**Immeuble " Visium "**
**22, avenue Aristide Briand**
**94117 Arcueil Cedex (FR)**

(56) Documents cités:
**US-A- 5 900 835**    **US-A- 6 038 526**

• ANGELOVA D ET AL: "Monte carlo-based filter for targettracking with feature measurement" INFORMATION FUSION, 2002. PROCEEDINGS OF THE FIFTH INTERNATIONAL CONFERENCE ON JULY 8-11, 2002, PISCATAWAY, NJ, USA, IEEE, vol. 2, 8 juillet 2002 (2002-07-08), pages 1499-1505, XP010594371 ISBN: 0-9721844-1-4
• JOHNSTON L A ET AL: "Performance analysis of a track before detect dynamic programming algorithm" ACOUSTICS, SPEECH, AND SIGNAL PROCESSING, 2000. ICASSP '00. PROCEEDINGS. 2000 IEEE INTERNATIONAL CONFERENCE ON 5-9 JUNE 2000, PISCATAWAY, NJ, USA,IEEE, vol. 1, 5 juin 2000 (2000-06-05), pages 49-52, XP010507265 ISBN: 0-7803-6293-4

## Description

### DOMAINE DE L'INVENTION

La présente invention concerne le problème général de la détection en sonar ou en radar Elle s'intéresse en particulier à la détection initiale d'un signal d'intérêt dans un flot de données correspondant au signal reçu par un tel équipement, encore appelé senseur.

### CONTEXTE DE L'INVENTION - ART ANTERIEUR

La fonction générale de Détection et de Pistage Automatique (ADT selon la dénomination anglo-saxonne) est une fonction couramment utilisée dans les sonars et les radars. Cette fonction a pour objet de traiter le flot de données reçu par le système considéré de façon à détecter la présence de signaux d'intérêt et à analyser l'évolution du contact à l'origine de ce signal. Cette évolution se produit généralement dans le domaine spatial et/ou dans le domaine fréquentiel. Les données analysées peuvent être représentées par des fonctions de la forme y(t, ω) dépendant d'une variable de temps t et d'une variable d'observation ω qui peut être par exemple la fréquence du signal reçu ou encore la direction d'arrivée (gisement) du signal.

De manière générale la fonction ADT opère sur un contact en deux phases successives.

Tout d'abord, la fonction ADT détermine pour chaque instant t considéré et pour chaque valeur de la variable d'observation ω, si un signal émanant d'un objet d'intérêt est présent ou non. C'est la phase de détection.

Ensuite, lorsqu'une décision positive a été prise pour un instant $t_{det}$, la fonction ADT procède à l'évaluation de la valeur ω(t) de la variable d'observation ω, et éventuellement de l'état x(t), de l'objet détecté, pour les instants t ultérieurs ($t \geq t_{det}$). C'est la phase de pistage. La phase de détection est également appelée phase d'initialisation de piste.

La phase d'initialisation et la phase de pistage constituent toutes deux des processus d'association de données au cours du temps. Mais, alors que le pistage travaille seulement sur un nombre restreint de données aux alentours des pistes, l'initialisation de piste est réalisée sur la totalité des données présentes. C'est pourquoi l'initialisation de piste (la détection) est réalisée par des traitements simples à mettre en oeuvre, alors que le pistage est généralement mis en oeuvre au moyen d'algorithmes de traitement puissants, nécessitant une grosse charge de calcul, tel que des algorithmes basés sur l'exploitation de modèles d'états.

Ceci constitue en soi une situation peu satisfaisante car la qualité de la détection souffre bien évidemment de la relative simplicité des algorithmes d'initialisation de piste.

Dans la plupart des sonars et des radars existants, la phase d'initialisation est basée sur un algorithme mettant en oeuvre de façon plus ou moins directe un principe connu de détection : la détection du type "P parmi N". L'entier N représente ici la durée de la fenêtre de test de détection le long d'un axe des temps discrétisé. Selon ce principe connu, la détection est effectuée en prenant en compte, pendant la durée de la fenêtre, le nombre d'instants où survient un événement répondant à un critère simple déterminé. La détection peut donc, par exemple, consister dans le calcul du nombre n d'instants pendant l'intervalle de temps de la fenêtre, où au moins un échantillon de signal, inclus dans la fenêtre, excède un seuil de détection $r_1$, et dans la comparaison de ce nombre n à un nombre P (P≤ N). Ainsi, un signal est détecté quand il y a de tels événements au moins P fois dans la fenêtre (n ≥ P).

Dans certaines applications connues, ce principe général est affiné par ajout de la condition supplémentaire que la valeur moyenne des P plus grands événements doit être supérieure à un deuxième seuil de détection $r_2$, lui-même supérieur au premier seuil $r_1$.

De manière connue, la probabilité de fausse alarme des procédés mettant en oeuvre ce principe connu, dépend de r1, de r2 et de la taille de la fenêtre de test dans le domaine des données d'observation ω. En particulier, l'augmentation de la taille de la fenêtre de test Δω dans le domaine des données d'observation conduit à l'augmentation de la probabilité de fausse alarme, mais permet de mieux s'affranchir des pertes de détection liées à la dérive au cours du temps du signal dans le domaine d'observation.

Dans la pratique, ces données contradictoires conduisent à rechercher des compromis plus ou moins satisfaisants. Ainsi, pour assurer une probabilité de détection convenable sans trop favoriser l'apparition de fausses alarmes, Δω est généralement choisi de façon à être, au plus, égal à la résolution du senseur et la durée N du test est choisie suffisamment petite pour que la dérive du signal pendant la durée de la mesure ne puisse pas excéder Δω. De plus, la durée N de la fenêtre ne doit pas excéder beaucoup la durée du signal le plus court à détecter, sinon la probabilité de détection de ce type de signaux, pour une probabilité de fausse alarme fixée, diminue.

Ce compromis conduit en particulier à choisir une durée N limitée à quelques unités, contrainte qui empêche de tirer pleinement parti de l'accroissement potentiel de la probabilité de détection sur les signaux de longue durée. Ainsi, quelle que soit la variante du principe de détection "P parmi N" utilisée celle-ci conduit toujours à limiter la durée N de la fenêtre de test utilisée, N étant généralement inférieur à 10..

La mise en oeuvre d'une fonction ADT peut également être réalisée en utilisant un procédé connu consistant à former avant détection des pistes d'essai, appelées pistes candidates, pour lesquelles on effectue des tests de validation. Lorsqu'une piste candidate passe positivement son test de validation, une détection est signalée et la piste devient une piste validée, gérée ultérieurement par le pistage.

Dans cette approche, connue sous l'appellation anglo-saxonne "Track before detect" (TBD), l'initialisation de piste consiste donc à former et tester des pistes candidates sur les données reçues. Les données reçues sont intégrées le long de ces pistes sélectionnées conformément à un modèle déterminé de dynamique, attribué au type d'objet que l'on souhaite détecter. L'utilisation d'un tel modèle permet d'intégrer ces données sur une durée de test plus longue que dans le cas de l'emploi du critère "P parmi N". Cette approche est donc particulièrement adaptée pour traiter des signaux ayant un faible rapport signal sur bruit. En revanche, comme pour la mise en oeuvre du critère "P parmi N", le traitement est ici le plus souvent réalisé sur des blocs de données de durée fixe. On doit alors soit faire un compromis entre la détection des signaux courts et celle des signaux longs en fixant une durée intermédiaire, soit faire en parallèle plusieurs traitements ayant des durées d'intégration différentes, ce qui multiplie par autant le coût de calcul.

## PRESENTATION DE L'INVENTION

Un des buts de l'invention est de proposer un procédé de détection permettant en particulier d'effectuer une initialisation de piste de type "Track before Detect" dont la durée d'intégration n'est pas fixe mais adaptée pour tirer parti de la durée du signal d'intérêt reçu, de façon à obtenir une probabilité de détection élevée tout en maintenant une probabilité de fausse alarme faible.

A cet effet l'invention a pour objet un procédé continu de détection d'un signal $s(t)$ présent dans un flot de données $y(t, \omega)$ dépendant d'une variable de temps discrète $t$ et d'une variable d'observation $\omega$, le signal étant caractérisé par un modèle d'état $x(t)$ à valeurs dans un ensemble fini $\{x_1, ..., x_N\}$, auquel correspond un ensemble fini $\{\omega_1, ..., \omega_N\}$ de N valeurs de la variable d'observation $\omega$.

Le procédé selon l'invention élabore pour chaque instant $t$ et pour chaque état $x_n$ un critère de détection $\Lambda_n(t)$, dont la valeur à chaque instant $t$, pour un état $x_n$, est calculée simultanément de deux façons différentes :

- comme une fonction du produit de la probabilité $P_n$ de l'état $x_n$, et du rapport des probabilités conditionnelles $p_1$ et $p_0$ de la donnée $y(t, \omega_n)$ en l'absence et en présence de signal,
- comme une fonction du produit d'une des N valeurs du critère calculées à l'instant précédent $t - 1$, de la probabilité de transition $P_{n,m}$ entre l'état $x_m$ pour lequel cette valeur a été calculée à l'instant $t-1$ et l'état $x_n$ considéré, et du rapport des probabilités conditionnelles $p_1$ et $p_0$ de la donnée $y(t, \omega_n)$ en l'absence et en présence de signal.

Les résultats des deux calculs sont comparés et la plus grande des deux valeurs calculées est attribuée au critère de $\Lambda_n(t)$.

Selon l'invention, le procédé comporte au moins:

- une étape A d'initialisation où les N valeurs du critère de détection $\Lambda_n$ à l'instant $t_0-1$ précédant le premier instant des données à traiter $t_0$ sont fixées à des valeurs prédéterminées,
- une étape B de calcul des N valeurs du critère $\Lambda_n$ à l'instant courant $t$,
- une étape C de détection par comparaison à un seuil des N valeurs du critère déterminées à la phase B, le dépassement du seuil de détection par une valeur du critère déterminant la présence d'un signal dans l'état $x_n$ correspondant à cette valeur du critère, à l'instant courant.

Les étapes B et C sont réalisées de manière itérative jusqu'à ce que le critère de détection $\Lambda_n$ dépasse le seuil de détection fixé à l'instant $t_{det}$. Une piste est alors créée avec l'état $x_n$ à cet instant. Les valeurs du critère de détection $\Lambda_m(t_{det})$ pour les états $x_m$ dans un voisinage de $x_n$, qui sont influencées par le maximum atteint à l'état $x_n$, sont en outre mises à zéro afin d'empêcher que ces valeurs proches du seuil de détection puissent causer l'initialisation d'une nouvelle piste à l'instant suivant $t_{det} +1$.

Selon l'art connu, le pistage, qui consiste à mettre à jour l'estimation de l'état $x(t)$ de chaque piste déjà initialisée, est effectué à chaque instant avant la mise en oeuvre du procédé d'initialisation de piste de la présente invention. Les données associées aux pistes par le pistage sont remplacées par la valeur moyenne du bruit, afin que ces données ne puissent favoriser l'initialisation de nouvelles pistes. Le traitement d'initialisation de piste de l'invention peut être couplé selon ce principe avec un traitement de pistage quelconque.

Selon l'invention, le critère de détection $\Lambda_n$ est défini par les relations générales :

$$\Lambda_n(t_0) = F\left(K_1 \cdot \frac{p_1(y(t_0, \omega_n))}{p_0(y(t_0, \omega_n))} P_n\right),$$

et

$$\Lambda_n(t) = \max\left\{F\left(K_2 \cdot \frac{p_1(y(t, \omega_n))}{p_0(y(t, \omega_n))} \cdot \max_{1 \le m \le N}\{P_{n,m} \cdot \Lambda_m(t-1)\}\right), F\left(K_1 \cdot \frac{p_1(y(t, \omega_n))}{p_0(y(t, \omega_n))} P_n\right)\right\}$$

où $t_0$ représente un instant initial, où $p_1$ et $p_0$ représentent les lois de probabilité conditionnelles des données $y(t, \omega)$ en l'absence et en présence de signal, où F est une fonction croissante et $K_1$ et $K_2$ sont deux constantes.

Le procédé selon l'invention met avantageusement en oeuvre un algorithme itératif basé sur l'exploitation d'un modèle de Markov caché (HMM selon la terminologie anglo-saxonne) auquel il associe une opération de réinitialisation automatique du critère $\Lambda_n$ conditionnée par la comparaison entre la probabilité initiale $P_n$ et la quantité:

$$K \cdot \max_{1 \le m \le N}\{P_{n,m} \cdot \Lambda_m(t-1)\}.$$

Selon une variante de mise en oeuvre du procédé, le facteur $K_1$ ou le le facteur $K_2$ sont régulés de façon à maintenir un taux de réinitialisation du calcul récursif de $\Lambda_n$, voisin d'une valeur spécifiée R. Le taux de réinitialisation est déterminé par la condition

$$F\left(K_1 \cdot \frac{p_1(y(t, \omega_n))}{p_0(y(t, \omega_n))} P_n\right) > F\left(K_2 \cdot \frac{p_1(y(t, \omega_n))}{p_0(y(t, \omega_n))} \cdot \max_{1 \le m \le N}\{P_{n,m} \cdot \Lambda_m(t-1)\}\right),$$

Selon une variante de mise en oeuvre du procédé R est choisi égal à 0,5.
Le procédé selon l'invention peut avantageusement être utilisé pour l'initialisation de pistes sonar sur des raies spectrales à partir de données d'observation $y(t, \omega)$ pour lesquelles $\omega$ est une donnée fréquentielle.
Le procédé selon l'invention peut également avantageusement être utilisé pour l'initialisation de pistes sonar sur des raies spectrales à partir de données d'observation $y(t, \omega)$ pour lesquelles $\omega$ est un couple de données (fréquence, gisement).

## DESCRIPTION DES FIGURES

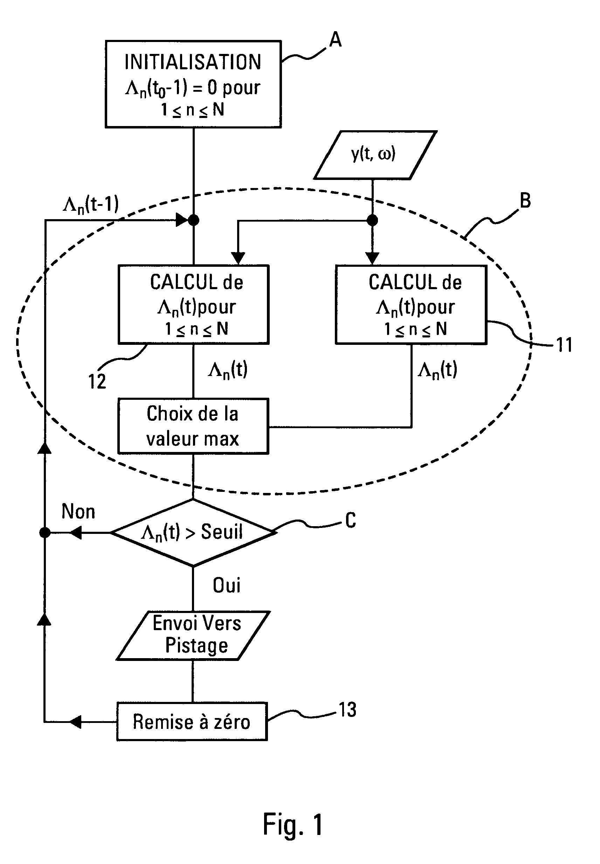

D'autres caractéristiques et avantages apparaîtront au travers de la description qui suit et de la figure 1 annexée qui représente un organigramme de principe du procédé selon l'invention.

## DESCRIPTION DETAILLEE

Nous présentons dans la suite de la description le principe de détection utilisant un modèle de Markov caché, sur lequel est basé le procédé de détection selon l'invention. Puis le principe de détection selon l'invention lui-même.
La détection au moyen d'un modèle de Markov caché est basée sur les considérations suivantes:

Un objet d'intérêt que l'on essaie de détecter au travers d'un signal s(t) le long d'un chemin $\omega_s(t)$ dans l'espace d'observation a une évolution x(t) dans l'espace des états au cours du temps qui n'est a priori pas connue.
Cette évolution peut être modélisée par un modèle de processus markovien pouvant prendre à chaque instant t d'observation, une valeur comprise dans un espace d'états E comportant N états possibles $\{x_1, ..., x_N\}$. A chaque état $x_n$ correspond une valeur $\omega_n$ de la variable d'observation $\omega$. Cette observation peut par exemple porter sur une variable unique telle que l'ensemble des composantes fréquentielles du signal reçu ou encore sur plusieurs variables associées comme la fréquence et la direction d'observation (gisement).
On appelle piste candidate la suite d'états x(t) que peut prendre l'objet au cours de son évolution pendant un temps compris entre un instant initial $t_0$ et un instant $t_0+\Delta t$. On note cette suite $X(t_0,\Delta t)=(x(t))_{t=t_0,...,t_0+\Delta t}$.

Les N probabilités $P_n = P[x(t_0) = x_n]$ pour chacun des états $x_n$ de l'espace des états de correspondre à l'état initial $x(t_0)$ ainsi que les $N^2$ probabilités $P_{n,m} = P[x(t) = x_n \mid x(t-1) = x_m]$ associées aux différentes transitions possibles entre états, constituent des paramètres connus associés au modèle de Markov caché choisi.

Dès lors, la probabilité a priori pour que le comportement de l'objet suive une piste candidate quelconque $X(t_0, \Delta t)$, est égale au produit de la probabilité de l'état $x(t_0)$ par les probabilités des transitions entre les états successifs $x(t-1)$ et $x(t)$ pour $t_0+1 \leq t \leq t_0+\Delta t$.

On note $\omega_x(t)$ la valeur de la variable d'observation correspondant à l'état x(t). La suite de données $Y_x(t_0,\Delta t) = (y(t,\omega_x(t)))_{t=t_0....,t_0+\Delta t}$ correspondant à la piste candidate $X(t_0, \Delta t)$ est modélisée par un processus aléatoire indépendant et on note $p_0$ et $p_1$ ses densités de probabilité respectivement en présence de bruit uniquement et en présence de signal et de bruit :

$$p_0(y(t,\omega_x(t))) \equiv P\big[y(t,\omega_x(t))\mid H_0\big] \qquad\qquad [1]$$

$$p_1(y(t,\omega_x(t))) \equiv P\big[y(t,\omega_x(t))\mid x(t)\big] \qquad\qquad [2]$$

où $H_0$ représente l'hypothèse d'une absence de signal correspondant à un objet d'intérêt dans le flot de données traité.

Il résulte du caractère markovien du processus aléatoire d'état x(t) et de l'indépendance du processus aléatoire de données $y(t,\omega_x(t))$ que la probabilité conjointe de $X(t_0, \Delta t)$ et $Y(t_0, \Delta t)$ a pour expression:

$$P\big[X(t_0,\Delta t), Y_X(t_0,\Delta t)\big] = P\big[y(t_0 + \Delta t, \omega_x(t_0 + \Delta t))\mid X(t_0,\Delta t)\big] \cdot P\big[Y_X(t_0,\Delta t - 1)\mid X(t_0,\Delta t)\big] \cdot$$
$$P\big[x(t_0 + \Delta t)\mid x(t_0 + \Delta t - 1)\big] \cdot P\big[X(t_0,\Delta t - 1)\big]. \qquad [3]$$

Dans un modèle de Markov caché, on fait de plus l'hypothèse que la dépendance d'une donnée $y(t_0 + \Delta t, \omega_x(t))$ par rapport au processus d'état est sa dépendance par rapport à l'état $x(t_0 + \Delta t)$ seulement. Par suite la probabilité conjointe de $X(t_0, \Delta t)$ et $Y(t_0, \Delta t)$ prend la forme récursive suivante:

$$P\big[X(t_0,\Delta t), Y_X(t_0,\Delta t),\big] = p_1\big(y(t_0 + \Delta t, \omega_x(t_0 + \Delta t))\big) \cdot P\big[x(t_0 + \Delta t)\mid x(t_0 + \Delta t - 1)\big] \cdot$$
$$P\big[X(t_0,\Delta t - 1), Y_X(t_0,\Delta t - 1)\big]. \qquad [4]$$

La probabilité de la suite $Y_x(t_0, \Delta t)$ dans l'hypothèse $H_0$ étant égale à

$$P\big[Y_X(t_0,\Delta t)\mid H_0\big] = \prod_{t=t_0}^{t=t_0+\Delta t} p_0(y(t,\omega_x(t))),$$ le rapport de vraisemblance $\Lambda_{X,Y}(t_0, \Delta t)$ de l'association de l'observation $Y_x(t_0, \Delta t)$ et du chemin modèle $X(t_0, \Delta t)$ est alors déterminé par les relations suivantes:

$$\Lambda_{X,Y}(t_0,0) = \frac{p_1(y(t_0,\omega_x(t_0)))}{p_0(y(t_0,\omega_x(t_0)))} \cdot P[x(t_0)] \qquad\qquad [5]$$

$$\Lambda_{X,Y}(t_0, \Delta t) = \frac{p_1(y(t_0 + \Delta t, \omega_x(t_0 + \Delta t)))}{p_0(y(t_0 + \Delta t, \omega_x(t_0 + \Delta t)))} \cdot$$
$$P[x(t_0 + \Delta t) | x(t_0 + \Delta t - 1)] \cdot \Lambda_{X,Y}(t_0, \Delta t - 1).$$

[6]

On rappelle ici qu'à t = $t_0$+$\Delta t$, x(t) peut a priori prendre n'importe quelle valeur $x_n$ de l'espace des états.

Il est par suite possible de déterminer pour tous les chemins X($t_0$, $\Delta t$) pour lesquels x(t) prend la valeur $x_n$ à l'instant t = $t_0$+$\Delta t$, le chemin pour lequel le critère de détection prend sa valeur maximum, notée $\Lambda(x_n, t_0, \Delta t)$. Cette détermination peut par exemple être faite en utilisant un algorithme itératif tel que l'algorithme de Viterbi par exemple. $\Lambda(x_n, t_0, \Delta t)$ sera alors calculé au moyen des relations suivantes:

$$\Lambda(x_n, t_0, 0) = \frac{p_1(y(t_0, \omega_n))}{p_0(y(t_0, \omega_n))} P_n$$

[7]

$$\Lambda(x_n, t_0, \Delta t) = \frac{p_1(y(t_0 + \Delta t, \omega_n))}{p_0(y(t_0 + \Delta t, \omega_n))} \max_{1 \leq m \leq N} \{ P_{n,m} \cdot \Lambda(x_m, t_0, \Delta t - 1) \}$$

[8]

Ainsi, au bout du temps d'observation $\Delta t$ on connaît l'ensemble des chemins qui maximisent, pour chaque valeur possible de x($t_0$+$\Delta t$), le critère de détection $\Lambda_{X,Y}(t_0, \Delta t)$. La détection peut alors être achevée en ne retenant de ces chemins que ceux pour lesquels la valeur $\Lambda(x_n, t_0, \Delta t)$ est supérieure à un seuil donné.

Chaque détection peut ensuite être utilisée pour initialiser une piste qui sera traitée par ailleurs.

Comme on peut donc le constater, l'utilisation d'un modèle de Markov caché pour rendre compte de l'évolution des paramètres d'un objet d'intérêt permet de réaliser une détection de cet objet par analyse du rapport de vraisemblance de seulement N hypothèses d'évolution des paramètres de l'objet à chaque instant de la mesure, ces hypothèses d'évolution se traduisant par N hypothèses sur l'évolution $\omega_s$(t) de la variable d'observation du signal.

En comparant à un seuil les valeurs de $\Lambda(x_n, t_0, \Delta t)$ pour $1 \leq n \leq N$, il est possible d'exécuter un test de détection portant sur l'ensemble des données y(t,$\omega$) présentes pendant l'intervalle de temps $\Delta t$. Si le test est positif à l'état $x_n$, alors le flot de données analysé pendant le temps $\Delta t$ est considéré comme incluant le signal d'un objet à détecter ayant l'état $x_n$ à l'instant $t_0$ + $\Delta t$

Avantageusement, parmi les tests de détection connus qui opèrent sur des données reçues dans un intervalle de temps fixé, ce test de détection est celui qui permet de maximiser la probabilité de détection d'un objet d'intérêt pour une probabilité de fausse alarme donnée. En revanche comme tous les tests portant sur une fenêtre de durée finie, l'utilisation d'un modèle de Markov caché associé à un critère de détection tel que celui défini par les relations 7 et 8, peut être amélioré si l'on adapte la durée de la fenêtre d'observation pour tenir compte de la durée du signal d'intérêt. Pour ce faire, il est connu de réaliser le traitement décrit pour toutes les valeurs possibles de t0 et $\Delta t$, ou du moins en pratique, pour un certain nombre de valeurs choisies judicieusement. Ce choix résulte généralement d'un compromis à trouver entre le coût de calcul et la performance de détection.

Afin d'éviter le recours à un compromis sur le choix de la taille de la fenêtre d'observation, le procédé selon l'invention met en oeuvre, à partir d'un modèle de Markov caché, un critère de détection modifié. Ce nouveau critère de détection est calculé de manière continue depuis un instant d'origine $t_0$ jusqu'à ce qu'une détection se produise. Comme précédemment cette détection est caractérisée par le dépassement par le critère de détection, d'un seuil donné. Le procédé selon l'invention combine ainsi le principe de la détection séquentielle avec celui de la détection à partir d'un modèle markovien caché.

Selon l'invention, la valeur maximale pour $x_n$, à l'instant t, du critère de détection n'est plus déterminé à partir des relations [7] et [8] de l'algorithme de Viterbi, mais, par exemple, par les relations suivantes:

$$\Lambda_n(t_0) = \frac{p_1(y(t_0, \omega_n))}{p_0(y(t_0, \omega_n))} P_n \qquad\qquad [9]$$

$$\Lambda_n(t) = \frac{p_1(y(t, \omega_n))}{p_0(y(t, \omega_n))} \max\left\{ K \cdot \max_{1 \le m \le N}\left\{ P_{n,m} \cdot \Lambda_m(t-1)\right\}, P_n \right\} \qquad\qquad [10]$$

Dans la relation [10], K correspond à un facteur constant inférieur ou égal à 1.

Comme on peut le constater, la relation [9] correspond à un cas particulier d'expression de la relation [10] pour lequel $\Lambda_n(t_0-1) = 0$ pour toutes les valeurs de n.

Comme pour une détection séquentielle classique, le calcul du critère $\Lambda_n$ ne requiert pas de fixer une durée $\Delta t$ de valeur donnée.

Selon l'invention, le calcul du critère de détection $\Lambda_n$ selon la relation [10] fait intervenir un facteur

$$A = \max\left\{ K \cdot \max_{1 \le m \le N}\left\{ P_{n,m} \cdot \Lambda_m(t-1)\right\}, P_n \right\} .$$

Le facteur A de la relation [10] diffère du facteur correspondant contenu dans la relation [8]. Ce facteur A selon l'invention permet avantageusement de pouvoir réaliser le test des données d'observation de manière continue. L'intervalle de temps pendant lequel le test est réalisé n'est donc plus ici un intervalle de durée fixe $\Delta t$ mais un intervalle permettant de prendre en compte la durée réelle du signal.

Le facteur A permet également avantageusement de prendre en compte le fait qu'un signal d'intérêt peut n'être présent que pendant une fraction de la fenêtre d'observation et permet de ne pas intégrer au test des données correspondant au signal d'intérêt, des données présentes pendant la durée de la fenêtre d'observation et correspondant seulement à du bruit.

Comme on peut le constater le critère $\Lambda_n(t)$ selon la relation [10], prise comme exemple non limitatif, est lié au critère $\Lambda(x_n, t_0, \Delta t)$ de l'algorithme de Viterbi par la relation suivante:

$$\Lambda_n(t) = K^{t-t_0}\Lambda\left(x_n, t_0, t-t_0\right) \qquad\qquad [11]$$

où $t_0$ représente l'instant de la dernière réinitialisation de $\Lambda_n(t)$. Selon l'invention, le facteur K est choisi de façon à ce que la relation suivante soit vérifiée:

$$P\left[ K \max_{1 \le m \le N}\left\{ P_{n,m} \cdot \Lambda_m(t-1)\right\} > P_n \mid H_0 \right] = \frac{1}{2} \qquad\qquad [12]$$

où $H_0$ est l'hypothèse qu'il n'y a pas de signal d'intérêt dans le flot de données observé.

Cette relation impose que les probabilités qu'une piste candidate $X(t_0, t-t_0)$ soit abandonnée ou continue à être explorée soient égales en l'absence de signal.

Le critère de détection selon l'invention, $\Lambda_n(t)$, peut être calculé à partir des relations récursives [9] et [10]. Ce calcul peut être effectué de manière similaire à l'algorithme de Viterbi, mis à part le processus de réinitialisation.

Le critère de détection $\Lambda_n(t)$ tel que décrit dans ce qui précède, est avantageusement mis en oeuvre sur les données $y(t, \omega)$ par le procédé de détection selon l'invention, selon un schéma général de fonctionnement semblable à celui illustré par la figure 1.

Durant la phase d'initialisation A, on calcule les valeurs du critère pour les N états selon la relation [10] en prenant $\Lambda_n(t_0-1) = 0$ pour toutes les valeurs de n.

Durant la phase B qui suit, le critère de détection est calculé pour les N états aux instants successifs selon la relation [10]. Ce calcul est effectué de manière récursive jusqu'à ce que, pour un instant donné t, $\Lambda_n(t)$ dépasse le seuil de détection pour au moins une valeur de n. L'apparition d'un tel dépassement cause la création d'une piste validée, dont l'état à cet instant est celui où est apparu le dépassement du seuil de détection, et la remise à zéro de la valeur du critère pour ce même état ainsi que pour les états voisins. Le calcul récursif de la phase B peut alors reprendre.

Les relations [9] et [10] donnent à titre d'exemple, une expression particulière du critère de détection mis en oeuvre par le procédé selon l'invention. Plus généralement, le critère $\Lambda_n(t)$, peut être défini par les relations suivantes:

$$\Lambda_n(t_0-1) = 0, \qquad\qquad\qquad [13]$$

$$\Lambda_n(t) = \max\left\{ F\left( K_2 \cdot \frac{p_1(y(t,\omega_n))}{p_0(y(t,\omega_n))} \cdot \max_{1\leq m\leq N}\{P_{n,m} \cdot \Lambda_m(t-1)\} \right), F\left( K_1 \cdot \frac{p_1(y(t,\omega_n))}{p_0(y(t,\omega_n))} P_n \right) \right\} \qquad [14]$$

où F est une fonction croissante, $K_1$ et $K_2$ sont deux constantes, éventuellement régulées en fonction des valeurs du critère de détection pour les N états. On peut ainsi, par exemple, fixer $K_1$ et $K_2$ de façon à maintenir le taux de réinitialisation du critère proche d'une valeur fixée R, égale par exemple à 0,5.

Les relations [9] et [10] sont un cas particulier des relations [13] et [14] où F est la fonction identité, $K_1$ étant égal à 1 et $K_2$ à K. Parmi les autres choix possibles de la fonction F, il y a notamment les fonctions logarithmes qui rendent le traitement totalement additif.

Le synoptique de la figure 1 résume de manière schématique le procédé de détection selon l'invention.

Ce procédé comporte principalement une phase d'initialisation A, une phase B de calcul de la valeur d'un critère de détection par implémentation d'un algorithme de calcul récursif, et une phase C de test du critère calculé par rapport à un seuil de détection.

Durant la phase A, le critère de détection $\Lambda_n(t)$ est initialisé pour un instant $t_0$-1 donné, en posant $\Lambda_n(t_0$-1) = 0 pour toutes les valeurs de n.

Ensuite, durant la phase B, pour chaque instant $t \geq t_0$, le calcul du critère de détection $\Lambda_n(t)$ est effectué de manière itérative pour chaque état $x_n$, par deux opérations de calcul 11 et 12 menées simultanément et correspondant à la relation [14]. Les résultats sont comparés et la valeur maximale pour chaque état n est conservée

A l'issue de chaque itération, durant la phase C, les valeurs $\Lambda_1(t)$, ..., $\Lambda_N(t)$ conservées sont comparées au seuil de détection.

Si le test est négatif pour tous les états $x_n$ la boucle d'itération se poursuit à l'instant suivant t+1 par un nouveau passage par la phase B.

Si en revanche le test est positif pour un état $x_n$, une détection est signalée donnant lieu à la création d'une piste validée à l'état $x_n$ pour l'instant t. Les valeurs du critère pour l'état $x_n$ et les états voisins font alors l'objet d'une remise à zéro 13. Puis, la boucle d'itération se poursuit à l'instant suivant (phase B).

Le procédé de détection selon l'invention peut avantageusement prendre place dans un grand nombre d'applications. On peut en particulier citer à titre d'exemple la détection sonar d'objets dont l'évolution est observée au travers de la variation au cours du temps de la fréquence f du signal reçu et de la pente de variation f de cette fréquence, encore appelée "frequency slope" selon la dénomination anglo-saxone.

Dans une telle application la variable d'état x(t) est définie par la paire {f(t), f'(t)}. Le procédé selon l'invention est alors appliqué aux données observées qui représentent par exemple l'amplitude quadratique des composantes spectrales d'un signal, obtenues par transformée de Fourier rapide (FFT) opérant sur une fenêtre glissante et ont pour expression $y(t, f) = |S(t,f)|^2$. La variable d'observation $\omega$ est dans ce cas la fréquence f des raies spectrales obtenues par FFT.

Dans le cas où la composante de bruit du signal A(t,f), dont y(t,f) représente le module au carré, est gaussienne, de moyenne nulle et de variance unité, et que la composante de A(t,f) constituée par le signal à détecter est d'amplitude constante, de rapport signal sur bruit $r_0$, les densités $p_0(y)$ et $p_1(y)$ suivent des lois de type $\chi^2$ à deux degrés de liberté, respectivement centrées et non centrées, ayant pour expression:

$$p_0(y) = \exp(-y) \qquad\qquad\qquad [15]$$

$$p_1(y) = \exp(-y - r_0) \cdot I_0\left(2\sqrt{r_0 y}\right) \qquad\qquad [16]$$

avec

$$I_0(z) = \frac{1}{\pi}\int_0^\pi e^{z\cos(\theta)}d\theta.$$

Soit $T_{FT}$ la longueur de la fenêtre temporelle glissante de la transformation de Fourier, $k_t$ et $k_f$ les coefficients tels que le pas d'échantillonnage temporel des données y (t, f) est égal $T_{FT}/K_t$ et le pas d'échantillonnage fréquentiel des états est égal à $T_{FT}^{-1}/k_f$. On fixe alors le pas de pente de fréquence des états égal à $T_{FT}^{-2}\cdot k_t/k_f$, rapport du pas fréquentiel sur le pas temporel.

L'espace d'états E est alors défini comme un réseau fini, avec des mailles de dimensions ($T_{FT}^{-1}/k_f$, $T_{FT}^{-2}\cdot k_t/k_f$).

Si on n'a pas de connaissance a priori sur la fréquence ou la pente des signaux que l'on cherche à détecter, on pose $P_n = 1/N$. Les probabilités de transition d'un état à l'autre peuvent être par exemple définies de la façon suivante:

Si

$$\frac{-1}{2k_f T_{FT}} \leq f_n - f_m - \frac{f'_n + f'_m}{2}\frac{T_{FT}}{k_t} < \frac{1}{2k_f T_{FT}} \qquad\qquad [17]$$

Alors

$$P_{n,m} = h\left(\frac{k_f T_{FT}^2}{k_t}\left|f'_n - f'_m\right|\right) \qquad\qquad [18]$$

Sinon $P_{n,m} = 0$,

Où h représente une fonction décroissante telle que:

$$h(0) + 2\sum_{i=1}^{\infty} h(i) = 1. \qquad\qquad [19]$$

Une telle expression de la probabilité de transition traduit le fait que la probabilité pour passer de l'état ($f_m$, $f'_m$) à l'état ($f_n$, $f'_n$) n'est pas nulle si et seulement si la différence entre l'écart de fréquence $f_n - f_m$ et la valeur moyenne ($f'_n + f'_m$) /2 des deux pentes multipliée par le pas temporel $T_{FT}/k_t$ est inférieur à la moitié du pas fréquentiel $T_{FT}^{-1}/k_f$. Dans ce cas, la probabilité de transition est une fonction décroissante de $|f'_n - f'_m|$.

Pour un état ($f_m$, $f'_m$) donné et un écart de pente ($f'_n - f'_m$) donné, il y a seulement une fréquence $f_n$ qui satisfait la relation [17]. La relation [19] est donc équivalente à la condition $\sum_{n} P_{n,m} = 1,$ qui exprime le fait que la somme des probabilités conditionnelles $P[x(t)=x_n \mid x(t-1) = x_m]$ des N états possibles, connaissant l'état précédent $x_m$, est égale 1.

En pratique, dans ce cas particulier, la fonction h qui détermine les probabilités de transition est fixée de façon arbitraire car on ne dispose que rarement d'un modèle statistique de l'évolution de la fréquence des signaux à détecter. On peut cependant rappeler que plus large est le sommet de la fonction h en 0, meilleur est la capacité du traitement à faire face à la fluctuation rapide de la variation de fréquence, mais plus basse est la performance du traitement sur la détection des signaux ayant une pente de fréquence f constante, voire nulle.

**Revendications**

1. Procédé continu de détection d'un signal s(t) présent dans un flot de données y(t, eu) dépendant d'une variable de temps discrète t et d'une variable d'observation $\omega$, le signal étant **caractérisé par** un modèle d'état x(t) à valeurs dans un ensemble fini $\{x_1, ..., x_N\}$, auquel correspond un ensemble fini $\{\omega_1, ..., \omega_N\}$ de N valeurs de la variable d'observation $\omega$, ce procédé élaborant pour chaque instant t et pour chaque état $x_n$ un critère de détection $\Lambda_n(t)$, **caractérisé en ce qu'**à chaque instant t la valeur du critère $\Lambda_n(t)$ pour un état $x_n$ est calculée simultanément de deux façons différentes :

   - comme une fonction du produit de la probabilité $P_n$ de l'état $x_n$, et du rapport des probabilités conditionnelles $p_1$ et $p_0$ de la donnée $y(t, \omega_n)$ en l'absence et en présence de signal,
   - comme une fonction du produit d'une des N valeurs du critère calculées à l'instant précédent t- 1, de la probabilité de transition $P_{n,m}$ entre l'état $x_m$ pour lequel cette valeur a été calculée à l'instant t-1 et l'état $x_n$ considéré, et du rapport des probabilités conditionnelles $p_1$ et $p_0$ de la donnée $y(t, \omega_n)$ en l'absence et en présence de signal,

   la plus grande des deux valeurs calculées étant attribuée au critère de $\Lambda_n(t)$.

2. Procédé selon la revendication 1 comportant au moins:

   - une étape A d'initialisation où les N valeurs du critère de détection $\Lambda_n$ à l'instant $t_0$-1 précédant le premier instant des données à traiter $t_0$ sont fixées à des valeurs prédéterminées,
   - une étape B de calcul des N valeurs du critère $\Lambda_n$ à l'instant courant t suivant les deux façons et de détermination de la valeur maximale,
   - une étape C de détection par comparaison à un seuil des N valeurs du critère déterminées à la phase B, le dépassement du seuil de détection par une valeur du critère déterminant la présence d'un signal dans l'état $x_n$ correspondant à cette valeur du critère, à l'instant courant,

   les étapes B et C étant réalisées de manière itérative.

3. Procédé selon l'une des revendications 1 ou 2, dans lequel le critère de détection $\Lambda_n(t)$ est défini par les relations suivantes:

$$\Lambda_n(t_0 - 1) = 0,$$

$$\Lambda_n(t) = \max\left\{ F\left(K_2 \cdot \frac{p_1(y(t,\omega_n))}{p_0(y(t,\omega_n))} \cdot \max_{1 \leq m \leq N}\{P_{n,m} \cdot \Lambda_m(t-1)\}\right), F\left(K_1 \cdot \frac{p_1(y(t,\omega_n))}{p_0(y(t,\omega_n))}P_n\right) \right\}$$

où $t_0$ est le premier instant des données à traiter, $\omega_n$, est le lieu dans l'espace d'observation correspondant à l'état $x_n$, où $p_1$ et $p_0$ représentent les lois de probabilité conditionnelles des données $y(t, \omega)$ en l'absence et en présence de signal, où F est une fonction croissante, et où $K_1$ et $K_2$ sont deux facteurs choisis arbitrairement.

4.  Procédé selon la revendication 3 pour lequel le facteur $K_1$ ou le facteur $K_2$ sont régulés de façon à maintenir un taux de réinitialisation du calcul récursif de $\Lambda_n$, déterminée par la condition

$$F\left(K_1 \cdot \frac{p_1(y(t,\omega_n))}{p_0(y(t,\omega_n))} P_n\right) > F\left(K_2 \cdot \frac{p_1(y(t,\omega_n))}{p_0(y(t,\omega_n))} \cdot \max_{1\leq m\leq N}\{P_{n,m} \cdot \Lambda_m(t-1)\}\right),$$

voisin d'une valeur spécifiée R.

5.  Procédé selon la revendication 4 pour lequel R est égal à 0,5.

6.  Application du procédé selon l'une des revendications précédentes à l'initialisation de pistes sonar sur des raies spectrales à partir de données d'observation y(t, ω) pour lesquelles ω est une donnée fréquentielle.

7.  Application du procédé selon l'une des revendications précédentes à l'initialisation de pistes sonar sur des raies spectrales à partir de données d'observation y(t, ω) pour lesquelles ω est un couple de données (fréquence, gisement).

**Claims**

1.  Continuous method of detecting a signal s(t) present in a data stream y(t, ω) dependent on a discrete time variable t and an observation variable ω, the signal being **characterized by** a state model x(t) with values in a finite set $\{x_1, ..., x_N\}$, to which there corresponds a finite set $\{\omega_1, ..., \omega_N\}$ of N values of the observation variable ω, this method formulating for each instant t and for each state $x_n$ a detection criterion $\Lambda_n(t)$,
    **characterized in that** at each instant t the value of the criterion $\Lambda_n(t)$ for a state $x_n$ is calculated simultaneously in two different ways:

    - as being a function of the product of the probability $P_n$ of the state $x_n$, and of the ratio of the conditional probabilities $p_1$ and $p_0$ of the datum $y(t, \omega_n)$ in the absence and in the presence of a signal,
    - as being a function of the product of one of the N values of the criterion that were calculated at the previous instant t-1, of the probability of transition $P_{n,m}$ between the state $x_m$ for which this value was calculated at the instant t-1 and the state $x_n$ considered, and of the ratio of the conditional probabilities $p_1$ and $p_0$ of the datum $y(t, \omega_n)$ in the absence and in the presence of a signal,

    the larger of the two calculated values being assigned to the criterion of $\Lambda_n(t)$.

2.  Method according to Claim 1 comprising at least:

    - an initialization step A where the N values of the detection criterion An at the instant $t_0$-1 preceding the first instant of the data to be processed to are fixed at predetermined values,
    - a step B of calculating the N values of the criterion $\Lambda_n$ at the current instant t according to the two ways and of determining the maximum value,
    - a step C of detecting by comparison with a threshold the N values of the criterion that were determined at phase B, the overshooting of the detection threshold by a value of the criterion determining the presence of a signal in the state $x_n$ corresponding to this value of the criterion, at the current instant,

    steps B and C being carried out in an iterative manner.

3.  Method according to either of Claims 1 and 2, in which the detection criterion $\Lambda_n(t)$ is defined by the following relations:

$$\Lambda_n(t_0 - 1) = 0,$$

$$\Lambda_n(t) = \max\left\{ F\left( K_2 \cdot \frac{p_1(y(t,\omega_n))}{p_0(y(t,\omega_n))} \cdot \max_{1 \le m \le N}\{P_{n,m} \cdot \Lambda_m(t-1)\}\right), F\left( K_1 \cdot \frac{p_1(y(t,\omega_n))}{p_0(y(t,\omega_n))}P_n\right)\right\}$$

where $t_0$ is the first instant of the data to be processed, $\omega_n$ is the locus in the observation space corresponding to the state $x_n$, where $p_1$ and $p_0$ represent the conditional probability laws for the data $y(t, \omega)$ in the absence and in the presence of a signal, where F is an increasing function, and where $K_1$ and $K_2$ are two arbitrarily chosen factors.

4. Method according to Claim 3, for which the factor $K_1$ or the factor $K_2$ is regulated so as to maintain a reinitialization rate for the recursive calculation of $\Lambda_n$ that is determined by the condition

$$F\left( K_1 \cdot \frac{p_1(y(t,\omega_n))}{p_0(y(t,\omega_n))}P_n\right) > F\left( K_2 \cdot \frac{p_1(y(t,\omega_n))}{p_0(y(t,\omega_n))} \cdot \max_{1 \le m \le N}\{P_{n,m} \cdot \Lambda_m(t-1)\}\right),$$

near to a specified value R.

5. Method according to Claim 4 for which R is equal to 0.5.

6. Application of the method according to one of the preceding claims to the initialization of sonar tracks on spectral lines on the basis of observation data $y(t, \omega)$ for which $\omega$ is a frequency datum.

7. Application of the method according to one of the preceding claims to the initialization of sonar tracks on spectral lines on the basis of observation data $y(t, \omega)$ for which $\omega$ is a data pair (frequency, bearing).

**Patentansprüche**

1. Kontinuierliches Verfahren zur Erfassung eines Signals s(t), das in einem Datenstrom $y(t,\omega)$ vorhanden ist, der von einer diskreten Zeitvariablen t und von einer Beobachtungsvariablen $\omega$ abhängt, wobei das Signal durch ein Zustandsmodell x(t) mit Werten in einer endlichen Einheit $\{x_1, ..., x_N\}$ **gekennzeichnet** ist, der eine endliche Einheit $\{\omega_1, ..., \omega_N\}$ von N Werten der Beobachtungsvariablen $\omega$ entspricht, wobei dieses Verfahren für jeden Zeitpunkt t und für jeden Zustand $x_n$ ein Erfassungskriterium $\Lambda_n(t)$ erarbeitet,
**dadurch gekennzeichnet, dass** in jedem Zeitpunkt t der Wert des Kriteriums $\Lambda_n(t)$ für einen Zustand $x_n$ gleichzeitig auf zwei verschiedene Weisen berechnet wird:

- als eine Funktion des Produkts aus der Wahrscheinlichkeit $P_n$ des Zustands $x_n$ und dem Verhältnis der bedingten Wahrscheinlichkeiten $p_1$ und $p_0$ des Datenwerts $y(t,\omega_n)$ in Abwesenheit und in Anwesenheit eines Signals,
- als eine Funktion des Produkts aus einem der N Werte des Kriteriums, die im vorhergehenden Zeitpunkt t-1 berechnet wurden, der Übergangswahrscheinlichkeit $P_{n,m}$ zwischen dem Zustand $x_m$, für den dieser Wert im Zeitpunkt t-1 berechnet wurde, und dem betrachteten Zustand $x_n$, und dem Verhältnis der bedingten Wahrscheinlichkeiten $p_1$ und $p_0$ des Datenwerts $y(t, \omega_n)$ in Abwesenheit und in Anwesenheit eines Signals,

wobei der größere der zwei berechneten Werte dem Kriterium von $\Lambda_n(t)$ zugewiesen wird.

2. Verfahren nach Anspruch 1, das mindestens aufweist:

- einen Schritt A der Initialisierung, in dem die N Werte des Erfassungskriteriums $\Lambda_n$ im Zeitpunkt $t_0$-1 vor dem ersten Zeitpunkt $t_0$ der zu verarbeitenden Daten auf vorbestimmte Werte festgelegt werden,
- einen Schritt B der Berechnung der N Werte des Kriteriums $\Lambda_n$ im laufenden Zeitpunkt t gemäß den zwei Weisen und der Bestimmung des maximalen Werts,
- einen Schritt C der Erfassung durch Vergleich mit einem Schwellwert der in der Phase B bestimmten N Werte des Kriteriums, wobei die Überschreitung des Erfassungsschwellwerts durch einen Wert des Kriteriums das Vorhandensein eines Signals im Zustand $x_n$ entsprechend diesem Wert des Kriteriums im laufenden Zeitpunkt bestimmt,

wobei die Schritte B und C iterativ durchgeführt werden.

3. Verfahren nach einem der Ansprüche 1 oder 2, bei dem das Erfassungskriterium $\Lambda_n(t)$ durch die folgenden Beziehungen definiert wird:

$$\Lambda_n(t_0 - 1) = 0,$$

$$\Lambda_n(t) = \max\left\{ F\left(K_2 \cdot \frac{p_1(y(t,\omega_n))}{p_0(y(t,\omega_n))} \cdot \max_{1 \le m \le N}\{P_{n,m} \cdot \Lambda_m(t-1)\}\right), F\left(K_1 \cdot \frac{p_1(y(t,\omega_n))}{p_0(y(t,\omega_n))} P_n\right)\right\}$$

wobei $t_0$ der erste Zeitpunkt der zu verarbeitenden Daten ist, $\omega_n$ der Ort im Beobachtungsraum entsprechend dem Zustand $x_n$ ist, wobei $p_1$ und $p_0$ die bedingten Wahrscheinlichkeitsgesetze der Daten $y(t,\omega)$ in Abwesenheit und in Anwesenheit eines Signals repräsentieren, wobei F eine steigende Funktion ist, und wobei $K_1$ und $K_2$ zwei willkürlich gewählte Faktoren sind.

4. Verfahren nach Anspruch 3, bei dem der Faktor $K_1$ oder der Faktor $K_2$ so reguliert werden, dass eine Rücksetzungsrate der rekursiven Berechnung von $\Lambda_n$ aufrechterhalten wird, bestimmt durch die Bedingung

$$F\left(K_1 \cdot \frac{p_1(y(t,\omega_n))}{p_0(y(t,\omega_n))} P_n\right) > F\left(K_2 \cdot \frac{p_1(y(t,\omega_n))}{p_0(y(t,\omega_n))} \cdot \max_{1 \le m \le N}\{P_{n,m} \cdot \Lambda_m(t-1)\}\right),$$

nahe einem spezifizierten Wert R.

5. Verfahren nach Anspruch 4, bei dem R gleich 0,5 ist .

6. Anwendung des Verfahrens nach einem der vorhergehenden Ansprüche auf die Initialisierung von Sonarspuren auf Spektrallinien ausgehend von Beobachtungsdaten $y(t,\omega)$ , für die $\omega$ ein Frequenzdatenwert ist.

7. Anwendung des Verfahrens nach einem der vorhergehenden Ansprüche auf die Initialisierung von Sonarspuren auf Spektrallinien ausgehend von Beobachtungsdaten $y(t,\omega)$, für die $\omega$ ein Datenpaar (Frequenz, Seitenpeilung) ist.

INITIALISATION
$\Lambda_n(t_0-1) = 0$ pour
$1 \leq n \leq N$ — A

$y(t, \omega)$

$\Lambda_n(t-1)$

B

CALCUL de
$\Lambda_n(t)$pour
$1 \leq n \leq N$

CALCUL de
$\Lambda_n(t)$pour
$1 \leq n \leq N$

12

11

$\Lambda_n(t)$

$\Lambda_n(t)$

Choix de la
valeur max

Non

$\Lambda_n(t) > $ Seuil — C

Oui

Envoi Vers
Pistage

Remise à zéro — 13

Fig. 1